Europäisches Patentamt

European Patent Office

Office européen des brevets

(19)

(11) Veröffentlichungsnummer: **0 132 455**
**A1**

(12) **EUROPÄISCHE PATENTANMELDUNG**

(21) Anmeldenummer: **83107479.4**

(22) Anmeldetag: **29.07.83**

(51) Int. Cl.⁴: **H 04 N 1/40**

(43) Veröffentlichungstag der Anmeldung:
**13.02.85 Patentblatt 85/7**

(84) Benannte Vertragsstaaten:
**AT BE CH DE FR GB IT LI LU NL SE**

(71) Anmelder: **DR.-ING. RUDOLF HELL GmbH**
**Grenzstrasse 1-5**
**D-2300 Kiel 14(DE)**

(72) Erfinder: **Karow, Peter**
**Kreienkoppel 55**
**D-2000 Hamburg 65(DE)**

(54) **Verfahren und Vorrichtung zur hochauflösenden Darstellung von Strichgrafiken.**

(57) Die Darstellung von Strichgrafiken wie Konstruktions- oder Katasterplänen auf dem Fernsehmonitor wird gegenüber bekannten Verfahren dadurch sehr verbessert, daß von der darzustellenden Grafik eine gegenüber dem auf dem Monitor darstellbaren Bildraster um ein Mehrfaches, vorzugsweise um das 4 × 4-fache verfeinerte Schwarz-Weiß-Bit-Matrix angefertigt wird. Aus dieser werden Rechtecke von z. B. 4 hintereinanderfolgenden Punkten aus 4 übereinanderliegenden Zeilen zu je einem "Überpixel" zusammengefaßt, dessen Grauwert dem Durchschnitt der Schwarz-Weiß-Werte der zusammengefaßten Einzelpixel entspricht.

Halbbyte-Darstellung

b

Fig.1

EP 0 132 455 A1

## Beschreibung

Verfahren und Vorrichtung zur hochauflösenden
Darstellung von Strichgrafiken.

## Technisches Gebiet

Die Erfindung bezieht sich auf das Gebiet der
Reproduktionstechnik, insbesondere auf die hochauflösende Darstellung von Strichgrafiken.

## Zugrundeliegender Stand der Technik

Es ist eine übliche Technik, Strichgrafiken durch
eine reine Schwarz/Weiß-Wiedergabe darzustellen.
Dies hat den Nachteil, daß Konturen vertreppt wiedergegeben werden, was zu einer verminderten Qualität der Darstellung führt. Diese Vertreppung ist
z. B. bei einem Fernsehbildschirm dadurch gegeben,
daß das Bild in einzelne Zeilen aufgelöst wird.

## Offenbarung der Erfindung

Der Erfindung liegt die Aufgabe zugrunde, die Wiedergabe von Strichgrafiken zu verbessern.

Die Erfindung erreicht dies dadurch, daß der Informationsgehalt einer Bit-Map von einem Ablesegerät
mehrzeilig abgelesen und einem Zwischengerät eingespeist wird, indem aus aufeinanderfolgenden Rechtecken von je m aufeinanderfolgenden Pixeln von je
n benachbarten Zeilen der durchschnittliche Grauwert der Rechtecke m x n ermittelt und an der zugehörigen Position des Rechtecks dargestellt wird.

Als vorteilhafte Weiterbildung der Erfindung ist

- 2 -

vorgesehen, daß die aufeinanderfolgenden Rechtecke aus je 4 aufeinanderfolgenden Pixeln von 4 aufeinanderfolgenden Zeilen bestehen.

Eine weitere Ausgestaltung der Erfindung besteht darin, daß die auf den Bildschirm wiedergegebenen Bildpunkte kleinere Abmessungen haben, als der Summe der Abmessungen der Einzelpixel entspricht, aus denen sie aufgebaut sind, wobei vorzugsweise vorgesehen ist, daß die auf dem Bildschirm wiedergegebenen Bildpunkte gegenüber den einzelnen Pixeln der Bit-Map etwa im Verhältnis 1 : 2 bis nahe an 1 : 1 verkleinert sind.

Erfindungsgemäß ist eine Vorrichtung zur Durchführung des Verfahrens vorgesehen, enthaltend einen Dauerspeicher für Geometrieprogramme, einen mit diesem über eine BUS-Leitung verbundenen Strich-Rechner, einen Bildschirmmonitor und einen diesem vorgeschalteten Digitalwandler, einem dem Bit-Map-Speicher nachgeschalteten Teilbyterechner sowie einem diesem nachgeschalteten und dem Monitor vorgeschalteten Teilbytespeicher, wobei der Teilbyterechner ein Halbbyte-Rechner und der Teilbytespeicher ein Halbbytespeicher sein kann. Weiterhin ist erfindungsgemäß ein Video-Controller vorgesehen, der vorzugsweise mindestens eine Bandbreite von $64 \times 10^6$ Halbbytes pro Sekunde aufweist.

Weiterhin ist zwischen dem Teilbytespeicher und dem Monitor im Video-Controller ein Selektor zum Selektieren einzelner Teilbytes aus einem Paket von mehreren Teilbytes zwischengeschaltet, wobei der Selektor ein 1 aus 8-Selektor ist.

0132455

- 3 -

Nach einer weiteren Ausgestaltung der Erfindung
ist zwischen der Schnittstelle a = Rechner/Speicher
und der Schnittstelle b = Speicher/Video-Controller
ein RAM-Zweiweg-Speicher mit einer mehrfachen
Blockverschachtelung vorgesehen, wobei der RAM-
Zweiweg-Speicher 4 ineinander verschachtelte
Blöcke enthält.

Mit diesem Verfahren und mit dieser Anordnung
wird eine so hohe Auflösung erreicht, daß sogar
im DIN-Al-Format mit üblicher Strichstärke von
etwa 0.2 mm angefertigte technische Zeichnungen
wie Konstruktions- oder Katasterpläne auf hochauflösenden Fernsehmonitoren mit z. B. 4000 x
4000 Bildpunkten (Pixels), wie sie heute schon
erhältlich sind, dargestellt werden können, was
bislang mit keinem bekannten Bildschirm möglich
war.

Dies wird im wesentlichen dadurch erreicht, daß
von der darzustellenden Strichgraphik zunächst
eine Schwarz-Weiß-Bit-Map (Bit-Anordnungskarte)
mit einem Mehrfachen an die Bildpunkte repräsentierenden Bits angefertigt wird, als dem auf dem
verwendeten Fernsehmonitor zur Verfügung stehenden Bildpunktraster entspricht. Soll z. B. eine
DIN-Al-Zeichnung dargestellt werden, dann wird
entsprechend dem Zeichnungsformat von etwa
60 x 80 cm eine Bit-Map mit 4000 x 4000 Bit
angefertigt, in der 1 Bit = 1 Pixel einer Pixel-
oder Strichbreite von 0.2 mm entspricht.

Erfindungsgemäß wird von dieser Bit-Map die Information mehrerer benachbarter Bildpunkte, insbeson-

- 4 -

dere die je eines Rechteckes von m hintereinanderfolgenden Punkten aus n aufeinanderfolgenden Zeilen,
vorzugsweise eines Rechteckes aus 4 x 4 Punkten,
als Grauton zusammengefaßt und verschlüsselt. Im
genannten bevorzugten Beispiel enthält ein solches
"Überpixel" als Grauton die Summe aus den schwarzen
Bits einer 4 x 4-Punktefläche, entsprechend einer
darstellbaren Grauskala von $16 = 2^4$ Werten, die
als Halbbyte (= 4 Bits) verschlüsselt werden kann.
Durch diese erfindungsgemäße Maßnahme wird die
Zahl der auf dem Bildschirm darzustellenden Bildpunkte erheblich reduziert - im genannten Beispiel
um den Faktor 16 - während die übertragene Informationsmenge um wesentlich weniger - im genannten
Beispiel um den Faktor 4 - verringert werden. Wie
praktische Versuche ergeben haben, wird trotz der
erheblichen Verringerung der übertragenen Bildpunkte die Lesbarkeit nicht entscheidend beeinträchtigt.

Man kann also nach dem erfindungsgemäßen Verfahren
z. B. die 80 x 80 cm einer Zeichnung mit 4000
x 4000 Bit in eine Bit-Map schreiben und diese
mit nur 1000 x 1000 verschiedenen Grauwerten über
eine besondere Schaltung an das Eingabegerät des
Fernsehbildschirms geben.

Gegebenenfalls können die "Überpixel" in kleinerer
Größe auf dem Bildschirm wiedergegeben werden als
der Summe der Einzelpixel entspricht, aus denen
sie aufgebaut sind. Im genannten bevorzugten Beispiel, in dem jedes "Überpixel" aus 4 x 4 Einzelpixeln mit den Abmessungen von je 0.1 x 0.1 mm
zusammengesetzt ist, wird es vorzugsweise statt in einer Größe von 0.4 x 0.4 mm je nach den Abmessungen des verwendeten Fernsehschirmes in einer solchen von 0.2 x 0.2 mm bis 0.36 x 0.36 mm wiedergegeben. Nach diesem Beispiel kann also eine Zeichnung von bis zu 80 x 80 cm mit $\frac{4000}{4} \times \frac{4000}{4} = 1000 \times 1000$ Überpixeln von je 0.2 x 0.2 bis 0.36 x 0.36 mm Seitenlänge, also auf einem Bildschirm von 20 x 20 bis 36 x 36 cm mit einer Bildkapazität von 1000 x 1000 Bildpunkten wiedergegeben werden.

Für die Durchführung des erfindungsgemäßen Verfahrens der Darstellung von Zeichnungen ist demnach ein Zwischengerät zwischen dem der Bit-Map nachgeschalteten Lesegerät und dem diesem vorgeschalteten Eingabegerät erforderlich, das die Bit-Map n-zeilenweise (vorzugsweise 4-zeilenweise) ausliest, in m-Pixelbreite (vorzugsweise 4-Pixelbreite) zu einer Reihe aufeinanderfolgender Rechtecke zusammenfaßt, aus den m x n (vorzugsweise 4 x 4) Einzelpixeln den durchschnittlichen Grauwert errechnet und als Mehr-Bit-Code (vorzugsweise als Halbbyte) in die Bildschirmeingabe einspeist.

Durch diese Art der Datenaufbereitung und die Benutzung eines hochauflösenden Fernsehmonitors kommt es zu folgenden überraschenden Effekten:

1. Linien mit einer Strichstärke von nur einem Pixel in der ursprünglichen Bit-Map werden hellgrau gezeichnet und erscheinen physikalisch und physiologisch auf dem TV-Monitor dünner als ihrer Strichstärke von - je nach Größe der verwendeten Bildschirmröhre - 0.2 bis 0.36 mm ent-

- 6 -

spricht, weil die sie aufbauenden "Überpixel"
weit mehr weiße als schwarze Bits enthalten.

2. Linien, die auf der Zeichnung einen Abstand von
nur 0.8 mm = 4 bit haben, werden unterscheidbar,
was ebenfalls mit bekannten Bildschirmterminals
nicht möglich ist.

3. Linien werden ohne den bisher störenden Rastereffekt (Sägezahneffekt bei Diagonalen) auf dem
Bildschirm dargestellt. Durch die Grauwertdarstellung werden nämlich die Rasterlücken mit
hellen Grauwerten zugeschmiert.

4. Die Darstellung von Linien verschiedener Strichstärken von 1 Pixel-Breite bis n-Pixel-Breite
wird ermöglicht. Dadurch kann man durch passende
Wahl der Linienbreite verschiedene Stufen der
Hervorhebung bzw. Betonung der Linien erhalten.

Kurze Beschreibung der Zeichnungen

Die Erfindung wird im folgenden anhand der Figuren 1 bis 5 näher erläutert. Es zeigen:

Figur 1a und 1b     Darstellungen von Linien durch
                    Halbtonwiedergabe,

Figur 2             ein Blockschaltbild einer Vorrichtung zur Durchführung des Verfahrens,

Figur 3             ein Diagramm für die Übergabe der
                    Halbbyte-Information aus dem Halbbyte-
                    Speicher in den Monitor

- 7 -

Figur 4    ein Beispiel für eine Schnittstelle
zwischen Rechner/Speicher und Speicher/
Rechner und

Figur 5    eine Schaltungsanordnung zur Übergabe
der Halbbyte-Information aus dem Halbbytespeicher an den Monitor.

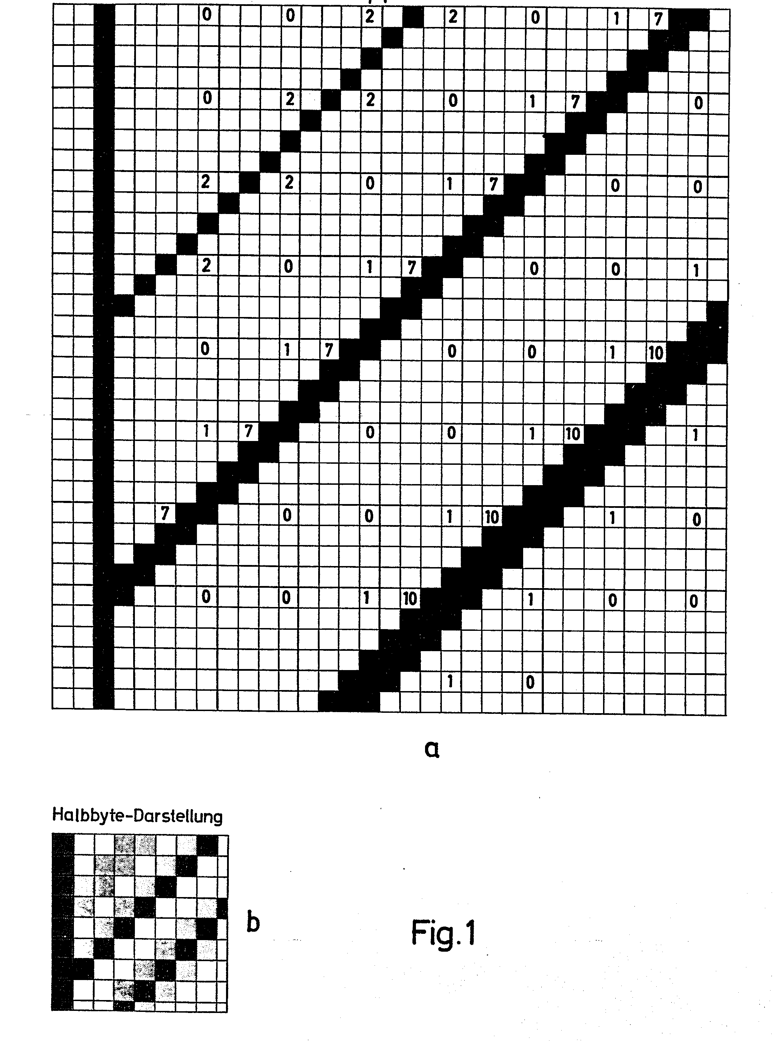

In Figur 1a sind einige Linien verschiedener
Strichstärken gezeigt. Die Linien mit nur einem
Pixel in der ursprünglichen Bit-Map werden hellgrau aufgezeichnet und erscheinen auf dem Bildschirm des Monitors dünner als ihre Strichstärke,
weil die sie aufbauenden "Überpixel" weit mehr
weiße als schwarze Bits enthalten.

Es ist für die Darstellung einer bevorzugten Ausführungsform die Zusammenfassung von 4 x 4 Einzelbits zu einem "Überpixel" gewählt worden, wobei
in der Zeichnung in jedem "Überpixel" die Zahl der
in ihm enthaltenen schwarzen Bits eingetragen ist.

In Fig. 1b sind die Darstellungen der gleichen
Linien mit Grautonwerten gezeigt. Im Gegensatz dazu
zeigen alle bekannten Bildschirm-Terminals bei
Verwendung einer Bildschirmgröße von 38 x 29 cm mit
einer gleichbleibenden Strichstärke von 0,5 mm auf.

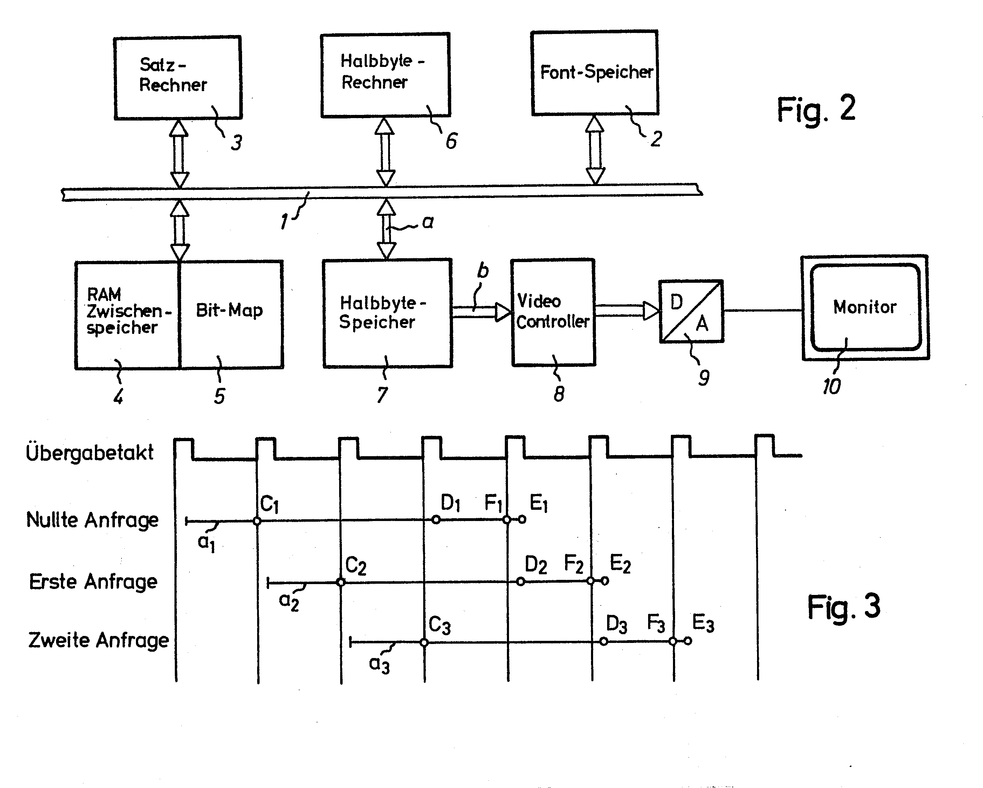

Figur 2 zeigt eine Schaltungsanordnung zur Durchführung des Verfahrens. Es werden folgende Funktionen
durchgeführt:

1. Füllen eines RAM-Schaltbyte-Speichers entsprechend
   der Spezifikation des verwendeten Bus-Systems (VME-Bus),

2. Übergabe (Lesen) der Halbbyte-Information aus einem Video-Controller und

3. BAS-Signalgenerierung nach RS-170 Norm mit einer Bandbreite von mindestens 64 MHz.

In Figur 2 ist eine Bus-Leitung (1) vorgesehen, z. B. ein handelsüblicher VME-Bus, über den die Baugruppen (2) - (7) miteinander kommunizieren können. An den Bus (1) ist ein Dauerspeicher (2) angeschlossen, in dem die verschiedenen zur Darstellung von Geometrie erforderlichen Programme, unter anderem zum Generieren von geraden Linien, Kreisen und Kreissegmenten sowie sogenannte Blockroutinen zur Darstellung von Diagrammen, Histogrammen und anderen zweidimensionalen Aufzeichnungen dauerhaft, vorzugsweise auf Magnetplatte (Flopy-Disks) gespeichert sind. Ein Linienrechner (3), z. B. ein Rechner vom Typ Force CPU, System 6800 VME, SYS 68 K/CPU-1, holt sich aus dem Dauerspeicher (2) über die der Kommunikation der verschiedenen Rechner untereinander und zum raschen Datentransfer dienende Bus-Leitung (1), diese Geometrie-Programme und speichert zu zweckmäßig vor ihrer weiteren Verwendung in einen Zwischenspeicher (4) der ein RAM-Speicher (Random-Access-Memory) sein kann. Mit Hilfe dieser zwischengespeicherten Geometrieprogramme können Daten und Befehle verarbeitet werden, die aus vorgeschalteten CAD-(Computer Aided Design)-Systemen über eine - nicht dargestellte - Rechnerkopplung ausgeliefert werden. Als Computer Aided Design-Systems kann z. B. das System "DOSIKON" der Firma Aristo, Hamburg, verwendet werden. Diese Daten und Befehle können gegebenenfalls im Dauerspeicher (2), z. B. auf einer zweiten Magnetplatte

- 9 -

gespeichert sein. Entsprechend den Zeichenbefehlen
für Geraden und Kreissegmente werden vom Linienrechner (3) mit Hilfe der Geometrie-Programme Pixel
generiert, die an die entsprechenden Positionen
in der Bit-Map (5) geschrieben werden. Als Bit-Map
kann vorzugsweise ein Speicher vom Typ SYS 64 K
DRAM-1, 8 Platinen, 4000 x 6000 bit, 4 MB
verwendet werden.

Die geometrische Interpretation der Bit-Map von
4000 x 4000 Pixel entspricht dem zu zeichnenden
Original. Bei einem Bildformat von 40 x 40 cm
ist die Zeichnungsbreite 0,1 mm.

Unabhängig vom Linienrechner (3) arbeitet der
erfindungsgemäß eingesetzte, ebenfalls an die Bus-
leitung (1) angeschlossene Teilbyte-Rechner (7),
der vorzugsweise ein Halbbyte-Rechner ist, z. B.
ein Rechner vom Typ Force CPU 6800 SYS 68 K/CPU-1.
Er liest sequentiell von links nach rechts Zeilen
von vorzugsweise je 4 bit Höhe ein und bildet aus
je 4 x 4 bit ein Halbbyte, das an die entsprechende
Position des Halbbyte-Speichers geladen wird. Er
geht zeilenweise vor, bildet aus den ersten 4 x
4000 bits der Bit-Map (5) die ersten 1 x 1000 Halbbytes des Speichers (7), ebenso aus dem zweiten 4 x
4000 Bit die zweiten 1 x 1000 Halbbytes usw. Die
geometrische Interpretation des Halbbyte-Speichers
entspricht der des Bit-Map-Speichers (5).

Unabhängig sowohl vom Linienspeicher (3) als auch
vom Halbbyte-Rechner (6) holt ein nur an den Halbbyte-Rechner (6), aber nicht an die BUS-Leitung (1)
angeschlossene Video-Controller (8) aus dem Halbbyte-Speicher (7) zeilenweise je 1000 Halbbytes heraus. Aus diesen werden über den für die Bildschirmeingabe notwendigen Digital-zu-Analog-Wandler (9) die Fernsehsignale für eine Fernsehzeile erzeugt und der Elektronik des Monitors (10) angeboten.

Um eine einwandfreie kontinuierliche Bilddarstellung auf dem Monitor (10) zu gewährleisten, ist es im geschilderten Beispiel zweckmäßig, einen Video-Controller-Eingang mit einer Bandbreite von mindestens $64 \times 10^{6}$ Halbbytes/sec zu verwenden.

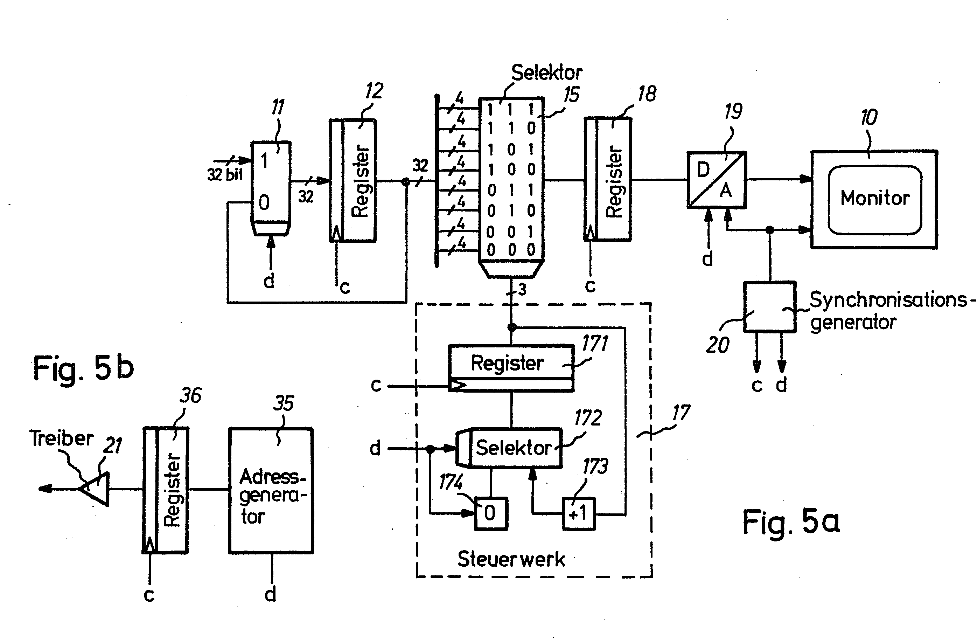

Die Übergabe der Halbbyte-Information aus dem Halbbyte-Speicher (7) an den Monitor (10) ist in den Figuren 3 bis 5d und 5b detaillierter dargestellt.

Der Video-Controller (8) verlangt nacheinander vom Halbbyte-Speicher (7) Pakete von je 8 Halbbytes = 32 bit bestimmter Adressen, z. B. das 15. Paket der 27. Zeile.

Die zeitliche Erledigung dieser Aufträge ist aus Figur 3 ersichtlich, in der die oberste Zeile den Übergabetakt darstellt, der beispielsweise 125 ns betragen kann. In der zweiten Zeile sind die aufeinanderfolgenden Auftragsnummern angegeben.

Von den Linien $a_1$, $a_2$, $a_3$ ..... stellt der linke Anfangspunkt den Beginn einer Anfrage und der rechte Endpunkt die Beendigung der Übergabe des angeforderten Halbbyte-Pakets aus dem Speicher (7) an den

- 11 -

Video-Controller (8) dar. Jede Anfrage wird erst aufgenommen, wenn der Speicher (7) eine positive Flanke (Punkt $C_1$, $C_2$, $C_3$ ... vgl. auch oberste Zeile) vorfindet.

Nach Beendigung der Bearbeitung (Punkte $D_1$, $D_2$, $D_3$) wird das angeforderte Halbbyte-Paket an den Video-Controller (8) übergeben (Übergabepunkte $F_1$, $F_2$, $F_3$ ...), (Endpunkte $E_1$, $E_2$, $E_3$ ...).

Wie aus Figur 3 ersichtlich, ist gemäß der dargestellten bevorzugten Ausführungsform der Erfindung vorgesehen, mehrere zum Teil überlappende Aufträge - im dargestellten Beispiel 4 - gleichzeitig zu übernehmen und auszuführen, wodurch eine erhebliche Beschleunigung der Übertragungsgeschwindigkeit erzielt wird.

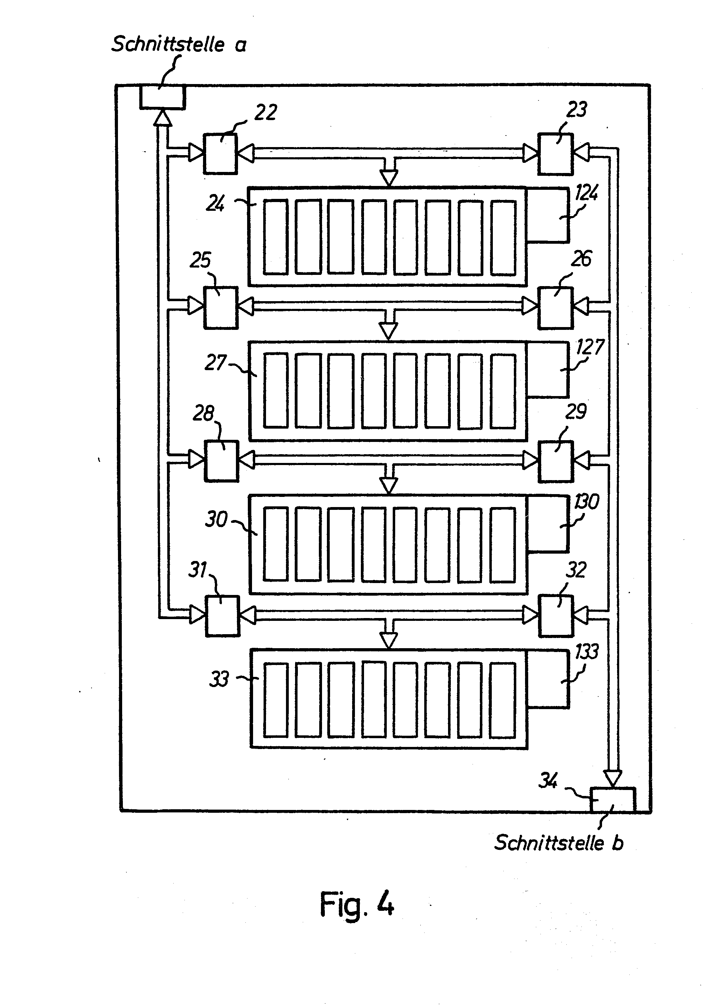

Figur 4 zeigt einen für diesen Zweck geeigneten zwischen der Schnittstelle a = BUS/Halbbyte-Speicher (7) und der Schnittstelle b = Halbbyte-Speicher (7)/Video-Controller (8) angeordneten 2-Wege-Speicher, in den und aus dem über beide Wege asynchron übertragen werden kann. Die Blockschaltung ermöglicht es mehrfach, im dargestellten Beispiel 4fach, zuzugreifen.

Über die Schnittstelle a ist er mit der Bus-Leitung 1 verbunden, über die Schnittstelle b mit dem Video-Controller (8).

Bei einem Speicherzugriff vom Video-Controller gelangt eine von einem Adreßgenerator, der später in Fig. 5a und 5b dargestellt ist, ausgesandte Adresse, unter der ein 32 Bit-Wort gelesen werden soll, über die Übergabeschnittstelle b, die in der Fig. 4 mit (34) bezeichnet ist, in eines der 4 Adreß/ Datenregister (23), (26), (29), (32). In welches genau, hängt von der Adresse ab. Bei fortlaufenden Adressen werden nacheinander die Register (23), (26), (29), (32) angesprochen.

Jedes der 4 Register ist mit einer Speichermatrix (24), (27), (30), (33) mit einer Kapazität von 64 K 32-Bit-Worten und einer Speichersteuerung (124, 127, 130, 133) verbunden. Die Speichersteuerung, die für das richtige Timing bei den Speicherbausteinen sorgt, ist an sich bekannt und aus Standard-TTL-Bausteinen aufgebaut. Die Speichermatrix ist aus 64 K Bit großen dynamischen RAM-Speichern (z. B. Mostek MK 4564) aufgebaut. Nach Ablauf der Zugriffszeit der Speichermatrix (24), (27), (30), (33) stehen die Daten am Ausgang der Matrix bereit und werden in die Adreß/Datenregister (23), (26), (29), (32) geladen. Über die Übergabeschnittstelle (34) gelangen sie in ein Halbbyte-Auffangregister des Video-Controllers (8). Analog zum Speicherzugriff des Video-Controllers verläuft der Zugriff des Halbbyte-Rechners (6).

Die Verbindung zu dem Bus (1) über die Schnittstelle a erfolgt über die Register (22), (25), (28) und (31).

In Figur 5 ist die Übergabe vom Halbbyte-Speicher (7) an den Monitor (10) im größeren Detail dargestellt.

- 13 -

Es ist ein Adreßgenerator (35) vorgesehen (z. B.
AMD AM 2932), welcher über einen Grundtakt d
gesteuert wird. Dieser Takt wird vom Synchronisationsgenerator (20) geliefert und ist mit dem in
Fig. 3 dargestellten Grundtakt, d. h. dem Übergabetakt, idtentisch. Der Adreßgenerator (35) übergibt
die aktuelle Adresse des abzurufenden Halbbyte-Paketes
an ein Adreßregister (36) (z. B. TI SN 74LS374),
welches die Adresse mit dem Systemtakt übernimmt und
am Ausgang zur Verfügung stellt. Über einen Bustreiber (21) gelangt die Adresse zum Halbbyte-
Speicher (7).

Die vom Halbbyte-Speicher gelieferten Daten gelangen
über einen Selektor (11) in das Halbbyte-Auffangregister (12), wo sie mit dem Systemtakt c übernommen werden.

Am Ausgang des Registers (12) steht ein Halbbyte-
Paket, bestehend aus 8 einzelnen Halbbytes, zur
Verfügung. Über einen 1 aus 8-Selektor (15) werden
der Reihe nach die einzelnen Halbbytes selektiert und
an ein Halbbyte-Darstellungsregister (18) weitergereicht, in das sie mit dem Systemtakt c übernommen
werden. Der 1 aus 8-Selektor (15) hat 8 Eingänge
sowie ein Steuerwerk (17). Das Steuerwerk (17)
besteht aus einem Register (171), das vom Systemtakt c
angesteuert wird. Das Register (171) ist mit einem
Selektor (172) verbunden, der von dem Grundtakt d
angesteuert wird, der ebenfalls wie der Takt c vom
Synchronisationsgenerator (20) geliefert wird. Der
Takt c ist 8mal schneller als der Takt d, da in
einer Taktdauer von d 8mal der 1 aus 8-Selektor (15)
abgefragt wird. Der Selektor (172) ist außerdem mit

- 14 -

einer Erhöhungsschaltung (173) und mit einem Null-Generator (174) verbunden, der ebenfalls vom Takt d angesteuert wird. Beim Laden eines neuen Halbbyte-Paketes in das Synchron-Register (14) wird das Steuerwerk (17) über das Steuersignal d zurückgesetzt, so daß das erste Halbbyte über den 1 aus 8-Selektor (15) an ein Halbbyte-Darstellungsregister (18) gelangt. Der Systemtakt c erhöht den Wert des Steuerwerkes um 1 und das nächste Halbbyte gelangt über den 1 aus 8-Selektor (15) an das Halbbyte-Darstellungsregister (18). Nach 7maligem Erhöhen des Wertes des Steuerwerkes (17) wird das letzte Halbbyte des Halbbyte-Paketes an das Halbbyte-Darstellungsregister (18) durchgeschaltet. Danach beginnt mit dem Rücksetzen des Steuerwerkes (17) über die Steuerleitung d ein neuer Ausgabezyklus der Halbbytes.

Das im Halbbyte-Darstellungsregiser (18) befindliche Halbbyte wird über den Digital-/Analogwandler (19) (z. B. Analogic MP 8318) in ein analoges Spannungssignal umgesetzt und an den Monitor (10) als Video-Signal in den Video-Eingang gegeben.

Ein an sich bekannter und käuflicher Synchronisationsgenerator (10), welcher diskret aus Standard TTL-Bausteinen aufgebaut sein kann, liefert die erforderlichen Synchronisationssignale (Horizontal- und Vertikal-Synchronisationssignale) zum Betreiben des Monitors (10) sowie den Grundtakt d und den 8mal höheren Takt c.

- 15 -

Diese Darstellung auf dem Monitor bietet gegenüber bekannten Verfahren eine Reihe von Vorteilen, vor allem eine stark verbesserte Liniendarstellung ohne Rastereffekte und die Auswahl unter verschieden starken Linien für die entsprechende jeweils gewünschte Hervorhebung. Ferner zeichnet sich das Terminal durch eine extrem schnelle Zeichengeschwindigkeit für Linien von bis zu 330 m/sec aus.

Patentansprüche

1. Verfahren zur hochauflösenden Darstellung von Strichgrafiken, dadurch gekennzeichnet, daß der Informationsgehalt einer Bit-Map von einem Ablesegerät mehrzeilig abgelesen und einem Zwischengerät eingespeist wird, in dem aus aufeinanderfolgenden Rechtecken von je m aufeinanderfolgenden Pixeln von je n benachbarten Zeilen der durchschnittliche Grauwert der Rechtecke m x n ermittelt und an der zugehörigen Position des Rechteckes dargestellt wird.

2. Verfahren nach Anspruch 1, dadurch gekennzeichnet, daß die aufeinanderfolgenden Rechtecke aus je 4 aufeinanderfolgenden Pixeln von vier aufeinanderfolgenden Zeilen bestehen.

3. Verfahren nach den Ansprüchen 1 und 2, dadurch gekennzeichnet, daß die wiedergegebenen Bildpunkte kleinere Abmessungen haben, als der Summe der Abmessungen der Einzelpixel entspricht, aus denen sie aufgebaut sind.

4. Verfahren nach Anspruch 3, dadurch gekennzeichnet, daß die wiedergegebenen Bildpunkte gegenüber den Einzelpixeln der Bit-Map etwa im Verhältnis 1 : 2 bis nahe an 1 : 1 verkleinert sind.

5. Vorrichtung zur Durchführung des Verfahrens nach den Ansprüchen 1 bis 4, enthaltend einen Dauerspeicher (1) für Geometrieprogramme, einen mit diesem über eine BUS-Leitung (2) verbundenen

- 17 -

Strichrechner (3), einen Bildschirmmonitor (10) und einen diesem vorgeschalteten Digital-Analog-Wandler (9), gekennzeichnet durch einen dem Bit-Map-Speicher (5) nachgeschalteten Teilbyte-Rechner (6) sowie einem diesem nachgeschalteten Teilbyte-Speicher (7).

6. Vorrichtung nach Anspruch 6, dadurch gekennzeichnet, daß der Teilbyte-Rechner (6) ein Halbbyte-Rechner und der Teilbyte-Speicher (7) ein Halbbyte-Speicher ist.

7. Vorrichtung nach den Ansprüchen 6 und 7, dadurch gekennzeichnet, daß der Eingang des Video-Controllers mindestens eine Bandbreite von $64 \times 10^6$ Halbbytes/sec hat.

8. Vorrichtung nach den Ansprüchen 6 - 8, gekennzeichnet durch einen zwischen dem Teilbyte-Speicher (7) und dem Monitor (10) im Video-Controller (8) ein Selektor zum Selektieren einzelner Teilbytes aus einem Paket von mehreren Teilbytes vorgesehen ist.

9. Vorrichtung nach den Ansprüchen 6 - 9, dadurch gekennzeichnet, daß der Selektor ein 1- aus -8 Selektor ist.

10. Vorrichtung nach den Ansprüchen 6 - 10, gekennzeichnet durch einen zwischen der Schnittstelle a = Rechner (6)/Speicher (7) und der Schnittstelle b = Speicher (7)/Video-Controller (8) angeordneten RAM-Zweiweg-Speicher mit einer mehrfachen Blockverschachtelung.

- 18 -

11. Vorrichtung nach Anspruch 11, dadurch gekennzeichnet, daß der RAM-Zweiweg-Speicher vier
    ineinander verschachtelte Blöcke enthält.

Halbbyte-Darstellung

b

Fig.1

Fig. 2

Satz-Rechner 3

Halbbyte-Rechner 6

Font-Speicher 2

RAM Zwischenspeicher 4

Bit-Map 5

Halbbyte-Speicher 7

Video Controller 8

D/A 9

Monitor 10

Fig. 3

Übergabetakt

Nullte Anfrage — $a_1$ — $C_1$ — $D_1$ $F_1$ $E_1$

Erste Anfrage — $a_2$ — $C_2$ — $D_2$ $F_2$ $E_2$

Zweite Anfrage — $a_3$ — $C_3$ — $D_3$ $F_3$ $E_3$

2/4

0132455

Schnittstelle a

Fig. 4

Fig. 5b

Fig. 5a

Selektor

Register

Monitor

Synchronisations-generator

Steuerwerk

Register

Selektor

Treiber

Adress-genera-tor

32 bit

0132455

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,Y | GB-A-2 099 656 (SATELLITE BUSINESS SYSTEMS) * Seite 1, Zeile 127 - Seite 3, Zeile 9; Seite 4, Zeilen 91-106, 120-126 * | 1-7,10 ,11 | H 04 N 1/40 |
| Y | US-A-4 150 400 (WONG) * Spalte 5, Zeilen 10-46 * | 2-4 | |
| Y | XEROX DISCLOSURE JOURNAL, Band 4, Nr. 6, November/Dezember 1979, Seiten 805-807, Stamford, Connecticut, USA J.L. POTTER: "A density preserving digital image magnifier/reducer" * Seite 806, Zeilen 1-32 * | 3-4 | |
| Y | GB-A-1 594 346 (MICRO CONSULTANTS) * Seite 18, Zeilen 14-52 * | 5-7,10 ,11 | RECHERCHIERTE SACHGEBIETE (Int. Cl. ³) H 04 N 1/00 G 06 F 13/00 |
| Y | EDN ELECTRICAL DESIGN NEWS, Band 25, Nr. 8, April 1980, Seiten 201-204, Denver, USA R.W. SCHMIDT: "Asynchronous-sampling method simplifies dual-port memories" * Seite 201, linke Spalte, Zeile 1 - Seite 203, Zeile 10; Seite 203, letzter Absatz * | 5-8,10 ,11 | |

--- -/-

Der vorliegende Recherchenbericht wurde für alle Patentansprüche erstellt.

| Recherchenort DEN HAAG | Abschlußdatum der Recherche 09-04-1984 | Prüfer DE ROECK A.F.A. |
|---|---|---|

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | PROCEEDINGS 6TH INTERNATIONAL CONFERENCE ON PATTERN RECOGNITION, München, 19.-22. Oktober 1982, Band 1, Seiten 250-253, I.E.E.E., New York, USA G.C. NICOLAE et al.: "The ultrafast asynchronous bus - A basic component for efficient image processing" * Seite 251, linke Spalte, Zeile 6 - rechte Spalte, Zeile 15 * | 10,11 | |

RECHERCHIERTE SACHGEBIETE (Int. Cl. 3)

Der vorliegende Recherchenbericht wurde für alle Patentansprüche erstellt.

| Recherchenort | Abschlußdatum der Recherche | Prüfer |
|---|---|---|
| DEN HAAG | 09-04-1984 | DE ROECK A.F.A. |